# EUROPEAN PATENT SPECIFICATION

(11) **EP 2 792 555 B1**
(45) Date of publication and mention of the grant of the patent: **05.06.2019**
(21) Application number: 13164250.6
(22) Date of filing: 18.04.2013
(51) Int. Cl.: B60S 1/08

(54) **Method for controlling a wiper device**
Verfahren zur Steuerung einer Wischvorrichtung
Procédé pour commander un dispositif d'essuie-glace

(43) Date of publication of application: 22.10.2014
(73) Proprietor: SMR Patents S.à.r.l., 2453 Luxembourg (LU)
(72) Inventor: Shepherd,Robert, Portchester, PO16 9SD (GB)
(74) Representative: Weber-Bruls, Dorothée

(56) References cited:
- EP-A1- 0 560 538
- EP-A2- 0 589 680
- WO-A1-98/29285
- WO-A1-2013/034165
- DE-A1- 10 236 887
- DE-A1-102004 048 346
- US-A1- 2008 061 722

## Description

The invention relates to a method for controlling a wiper device for cleaning a surface of a dome-shaped or plate-shaped body according to the preamble of claim 1.

Furthermore, the invention relates to a wiper device for cleaning a surface of a dome-shaped or plate-shaped body, having at least one wiper movably touching the surface of the body, at least one drive mechanism to move the wiper from a first position to at least one second position, at least one sensor unit and at least one controller.

Such a method and such a wiper device is known by EP 0 589 680 A2. The wiper shown there is driven by a drive mechanism from a first position to at least one second position. A camera detects the surface of the body, in particular the dirt detached to the surface. If the dirt on the surface of the body reaches or exceeds a predetermined grade, the drive mechanism is activated. As long as the degree of dirt on the surface does not underrun the predetermined grade, a wiper is driven from the first position to the second position and back.

As the performance of the wiper device is dependent on environmental influences, in particular very high and very low temperatures, it can be excluded that the wiper is exactly driven in a parking position when the controller unit drives the drive mechanism to stop. In such cases the wiper can handicap the view through the body.

Furthermore, due to environmental influences, the velocity of the wiper can change but can result in annoying effects.

Therefore, it is the task of the invention to reduce annoying effects of a wiper device.

The task is resolved in a method referred to
a. Moving the wiper from a first position to a second position by the drive mechanism driven by the controller determining a velocity of the wiper;
b. Tracking the movement of the wiper by using image processing techniques by using the sensor unit analysing recorded images of the camera, where the velocity of the wiper is tracked by the sensor unit;
c. Calculating a position of the wiper from tracking the movement of the wiper independently from the fact if the wiper is always detectable by the sensor unit;
d. Using both parameters, the image processing technique to track the movement of the wiper and a dirt detection to start and stop the drive mechanism; and
e. Deactivating the drive mechanism of the wiper at a determined deactivation position taking into account a protraction between detecting that a picture quality is good again and a real standing still position of the wiper to park the wiper in a defined parking position..

The dome-shaped or plate-shaped body can be a window glass or plastic plate, a lens or a prism. The wiper can be a wiper plate, a wiper fibre or the like.

The first position can be a parking position, the wiper is arranged in a non-driven mode and the second position can be a turning point, in particular when the wiper is driven to do an accelerating movement.

By tracking the movement of a wiper by the sensor unit, the position of the wiper on the surface of the dome-shaped or plate-shaped body is detectable, even if the wiper is out of sight of the sensor unit. Therefore, in particular for starting or stopping the drive mechanism, it can be guaranteed that the wiper is for example in the first position as parking position to have no annoying effect. Therefore, for example stopping the wiper that it is arranged across the surface of the body can be provided.

The movement of the wiper can be tracked by a plurality of methods, in particular by a motion sensor or the like.

By using image processing techniques, no motion sensor is needed. By using image processing techniques, a normal camera can be used and the recorded images of the camera are analysed by the sensor unit. Therefore, the applicability of the camera in particular when it is part of a wiper device is increased.

To make the start and the stop of the drive mechanism easier, the controller unit drives the drive mechanism, in particular the controller unit starts and stops the drive mechanism.

The velocity, in particular the angular velocity, is tracked by the sensor unit and determined by the controller unit.

Basically any condition can cause the wiper to be moved by the drive mechanism from a first position to a second position. For example, the moving of the wiper from the first position to the second position can be caused by water, in particular rain drops, or the like. It has been found advantageous that dirt on the surface of the dome-shaped or plate-shaped body is detected by the sensor unit or another sensor unit and/or that the driving of the drive mechanism, in particular the start and the stop of the drive mechanism, is affected by the detected dirt on the surface of the dome-shape or plate-shaped body.

In continuation of the embodiment referred before, it has been found advantageous that the controller unit starts the drive mechanism if a predetermined grade of dirt on the surface detected by the sensor unit is reached or exceeded and/or that the controller unit stops the drive mechanism if the predetermined grade of dirt on the surface is underrun and the wiper is in at least one defined parking position.

Therefore, starting and stopping the drive mechanism by the controller unit can be determined by a dirt detection algorithm, in particular by registration of a deterioration and bonification in picture quality. If deterioration of the picture quality is detected the drive mechanism will be started. Once the wiper is in motion the wiper is tracked back and forth until it needs to stop.

As there can be protraction between the detection that the picture quality is good enough again and the real standing still position of the wiper, a deactivation position of the wiper for deactivation the drive mechanism can be determined. Doing so, the wiper can be parked in the or one defined parking position.

When doing so, it can be guaranteed that the wiper is arranged in the parking position when the drive mechanism is driven to stop. Therefore, annoying effects are reduced.

Finally, it has been found practicable if the detected velocity of the plate, in particular the performance of the drive mechanism, is adjusted or calibrated by the controller unit dependent on a specified velocity, in particular angular velocity.

When doing so, environmental influences, in particular very high and very low temperatures, can be reduced to their influences on technical effects.

Further, the task is solved by a wiper from the beginning in that the drive mechanism is driven by the controller by a method comprising at least one of the steps described before.

The drive mechanism can be activated or deactivated by applying or removing the voltage and current respectively. Further it has been found advantageous if a wiper device is controlled by the use of a switch, in particular a relay and/or a electronic switch, for starting and stopping the driving mechanism. Pulse width modulation could also be applied to vary the motor speed, if a steady slow or fast wipe is required dependent upon environmental conditions.

The drive mechanism can have variable speed as determined by the pulse width modulation.

Finally, it is advantageous if the wiper device comprises a camera as sensor unit.

The method for controlling a wiper device and a wiper device are advantageous in several aspects:
By tracking the movement of the wiper by a sensor unit, it is possible to indicate the real velocity of the wiper which makes the method independent from environmental influences. By tracking the movement of the wiper, it is possible to calculate the position of the wiper independent from the fact if the wiper is always detectable by the sensor unit. Therefore, it is possible to calculate the exact position of the wiper plate even if it is out of view of the sensor unit.

Further, annoying effects can be reduced by stopping the wiper in a parking position.

The various advantages of the present invention will become apparent to a person skilled in the art by reading the following specification and sub-joined claims and by referencing the following drawings:
- Figure 1: a schematic illustration of a wiper device;
- Figure 2: a schematic illustration of a method for controlling a wiper.

The figures show an embodiment of a wiper device 2 and a method for controlling the wiper device 2. The wiper device 2 is for cleaning a surface 4 of a dome-shaped or plate-shaped body 6. The wiper device 2 has a wiper 8 and a drive mechanism 10 to move the wiper 8 from first position PI to at least a second position P2. The second position is dotted displayed. Further, the wiper device 2 comprises one sensor unit 12 and at least one controller 14. With the sensor 12 the plate-shaped body 6 can be monitored.

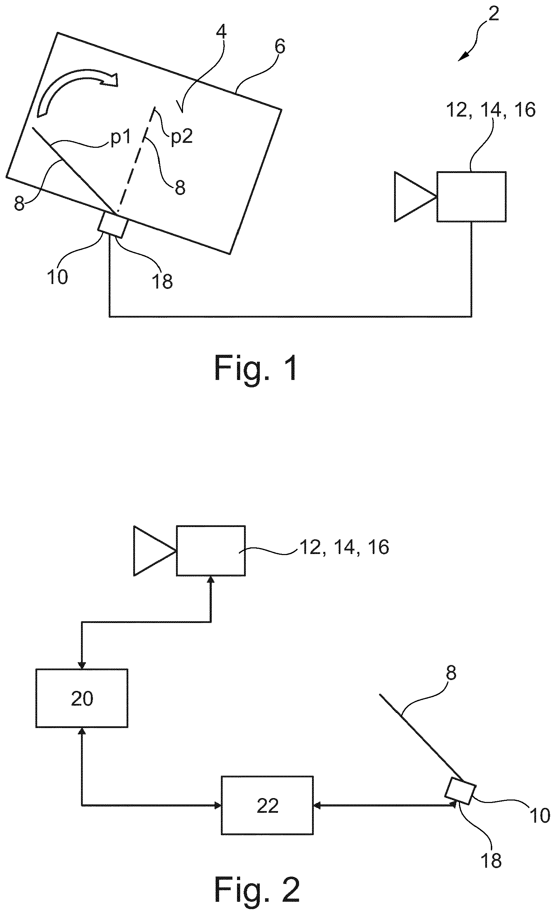

In the embodiment as shown in figure 1, the sensor unit 12 comprises a camera 16. *To stop the drive mechanism 10 a electronic switch 18 is connected.* Figure 2 shows a schematic illustration of the method for controlling a wiper device 2. The moving of the wiper 8 from the first position PI to a second position P2 is tracked by the sensor unit 12. The tracking of the movement of the wiper 8 comprises an image processing technique 20. Further, to start and stop the drive mechanism 10 the detection of dirt 22 is provided by the sensor unit 12. Both parameters, the image processing technique to track the movement of the wiper 8 and the dirt detection 22, are used to start and stop the drive mechanism 10. In the following, the method for controlling a wiper device 2 is described.

If the sensor unit 12 detects that the grade of dirt on the surface 4 of a dome-shaped or a plate-shaped body 6 reaches or exceeds a predetermined grade of dirt, the wiper device, in particular the drive mechanism 10, is started. The wiper 8, that is detected to the drive mechanism 10 to be moved from the first position PI to the second position P2 is started. If the sensor unit 12 detects that the grade of dirt on the surface underruns the predetermined grade of dirt and if the sensor unit 12 detects that the wiper 8 is in at least one defined parking position, the drive mechanism 10 is stopped.

The features disclosed in this specification, the claims and the figures may be important for the claimed invention, taken separately or in any combination, for the respective different embodiments.

### Reference Numerals

- 2: wiper device
- 4: surface
- 6: dome-shaped or plate-shaped body
- 8: wiper
- 10: drive mechanism
- 12: sensor unit
- 14: controller unit
- 16: camera
- 18: electronic switch
- 20: step of image processing techniques
- 22: step of dirt detection
- PI: first position
- P2: second position

## Claims

1. Method for controlling a wiper device (2) for cleaning a surface (4) of a dome-shaped or plate-shaped body (6), having at least one wiper (8) movably touching the surface (4) of the body, at least one drive mechanism (10) to move the wiper (8) from a first position (P1) to at least one second position (P2), at least one sensor unit (12) comprising a camera (16) and at least one controller (14), providing the steps:
a. Moving the wiper (8) from a first position (P1) to a second position (P2) by the drive mechanism (10) driven by the controller (14) determining a velocity of the wiper (8);
b. Tracking the movement of the wiper (8) by using image processing techniques (20) by using the sensor unit (12) analysing recorded images of the camera (16), where the velocity of the wiper (8) is tracked by the sensor unit (12);
c. Calculating a position of the wiper (8) from tracking the movement of the wiper (8) independently from the fact if the wiper (8) is always detectable by the sensor unit (12);
d. Using both parameters, the image processing technique (20) to track the movement of the wiper (8) and a dirt detection (22) to start and stop the drive mechanism (10); and
e. Deactivating the drive mechanism (10) of the wiper (8) at a determined deactivation position taking into account a protraction between detecting that a picture quality is good again and a real standing still position of the wiper (8) to park the wiper (8) in a defined parking position.

2. Method according to claim 1 , **characterized in that** the controller unit (14) starts and stops the drive mechanism (10).

3. Method according to any of the preceding claims, **characterized in that** dirt on the surface (4) of the dome-shaped or plate-shaped body (6) is detected by the sensor unit (12) or another sensor unit (12) and/or that the driving of the drive mechanism (10), in particular the start and the stop of the drive mechanism (10), is affected by the detected dirt on the surface (4) of the dome-shape or plate-shaped body (6).

4. Method according to claim 3, **characterized in that** the controller unit (14) starts the drive mechanism (10) if a predetermined grade of dirt on the surface (4) detected by the sensor unit (12) is reached or exceeded and/or that the controller unit (14) stops the drive mechanism (10) if the predetermined grade of dirt on the surface (4) is underrun and the wiper (8) is in at least one defined parking position.

5. Method according to any of the preceding claims, **characterized in that** the detected velocity of the plate, in particular the performance of the drive mechanism (10) is adjusted or calibrated by the controller unit (14) dependent on a specified velocity, in particular angular velocity.

6. Wiper device (2) for cleaning a surface (4) of a dome-shaped or plate-shaped body (6), having at least one wiper (8) movably touching the surface (4) of the body, at least one drive mechanism (10) to move the wiper (8) from a first position (P1) to at least one second position (P2), at least one sensor unit (12) comprising a camera (16) and at least one controller (14), **characterized in that** the drive mechanism (10) is driven by the controller (14) by a method according to one of claims 1 to 6.

7. Wiper device (2) according to claim 6, **characterized in** providing a switch, in particular a relay and/or a electronic switch (18), for starting and stopping the drive mechanism (10).

## Patentansprüche

1. Verfahren zum Steuern einer Wischvorrichtung (2) zum Reinigen einer Oberfläche (4) eines kalottenförmigen oder plattenförmigen Körpers (6) mit mindestens einem Wischer (8), der die Oberfläche (4) des Körpers bewegbar berührt, mindestens einem Antriebsmechanismus (10), um den Wischer (8) von einer ersten Position (P1) in mindestens eine zweite Position (P2) zu bewegen, mindestens einer Sensoreinheit (12), die eine Kamera (16) und mindestens eine Steuerung (14) umfasst, wobei folgende Schritte vorgesehen sind:
a. Bewegen des Wischers (8) von einer ersten Position (P1) in eine zweite Position (P2) durch den Antriebsmechanismus (10), der von der Steuerung (14) angesteuert wird, die eine Geschwindigkeit des Wischers (8) bestimmt;
b. Verfolgen der Bewegung des Wischers (8) durch Einsatz von Bildverarbeitungstechniken (20) unter Verwendung der Sensoreinheit (12), die aufgenommene Bilder der Kamera (16) analysiert, wobei die Geschwindigkeit des Wischers (8) von der Sensoreinheit (12) verfolgt wird;
c. Berechnen einer Position des Wischers (8) aus dem Verfolgen der Bewegung des Wischers (8) unabhängig davon, ob der Wischer (8) jederzeit von der Sensoreinheit (12) erkennbar ist;
d. Verwenden beider Parameter, der Bildverarbeitungstechnik (20) zum Verfolgen der Bewegung des Wischers (8) und einer Schmutzerkennung (22) zum Starten und Stoppen des Antriebsmechanismus (10); und
e. Deaktivieren des Antriebsmechanismus (10) des Wischers (8) an einer festgelegten Deaktivierungsposition unter Berücksichtigung einer Verzögerung zwischen dem Erkennen, dass eine Bildqualität wieder gut ist und einer tatsächlichen Stillstandsposition des Wischers (8), um den Wischer (8) in einer festgelegten Parkposition zu parken.

2. Verfahren nach Anspruch 1, **dadurch gekennzeichnet, dass** die Steuereinheit (14) den Antriebsmechanismus (10) startet und stoppt.

3. Verfahren nach einem der vorangehenden Ansprüche, **dadurch gekennzeichnet, dass** Schmutz auf der Oberfläche (4) des kalottenförmigen oder plattenförmigen Körpers (6) von der Sensoreinheit (12) oder einer anderen Sensoreinheit (12) erkannt wird und/oder dass das Ansteuern des Antriebsmechanismus (10), insbesondere das Starten und das Stoppen des Antriebsmechanismus (10), durch die erkannte Verschmutzung auf der Oberfläche (4) des kalottenförmigen oder plattenförmigen Körpers (6) beeinflusst wird.

4. Verfahren nach Anspruch 3, **dadurch gekennzeichnet, dass** die Steuereinheit (14) den Antriebsmechanismus (10) startet, falls ein vorgegebener Verschmutzungsgrad auf der Oberfläche (4), der von der Sensoreinheit (12) erkannt wird, erreicht oder überschritten wird und/oder dass die Steuereinheit (14) den Antriebsmechanismus (10) stoppt, falls der vorgegebene Verschmutzungsgrad auf der Oberfläche (4) unterschritten wird und der Wischer (8) sich an mindestens einer festgelegten Parkposition befindet.

5. Verfahren nach einem der vorangehenden Ansprüche, **dadurch gekennzeichnet, dass** die erkannte Geschwindigkeit der Platte, insbesondere die Leistung des Antriebsmechanismus (10), von der Steuereinheit (14) abhängig von einer spezifizierten Geschwindigkeit, insbesondere einer Winkelgeschwindigkeit, eingestellt oder kalibriert wird.

6. Wischvorrichtung (2) zum Reinigen einer Oberfläche (4) eines kalottenförmigen oder plattenförmigen Körpers (6) mit mindestens einem Wischer (8), der die Oberfläche (4) des Körpers bewegbar berührt, mindestens einem Antriebsmechanismus (10), um den Wischer (8) von einer ersten Position (P1) in mindestens eine zweite Position (P2) zu bewegen, mindestens einer Sensoreinheit (12), die eine Kamera (16) und mindestens eine Steuerung (14) umfasst, **dadurch gekennzeichnet, dass** der Antriebsmechanismus (10) von der Steuerung (14) nach einem Verfahren nach einem der Ansprüche 1 bis 6 angesteuert wird.

7. Wischvorrichtung (2) nach Anspruch 6, **dadurch gekennzeichnet, dass** ein Schalter, insbesondere ein Relais und/oder ein elektronischer Schalter (18) zum Starten und Stoppen des Antriebsmechanismus (10) vorgesehen ist.

## Revendications

1. Procédé de commande d'un dispositif d'essuyage (2) pour nettoyer une surface (4) d'un corps (6) en forme de calotte ou de plaque, ayant au moins un essuie-glace (8) touchant de manière mobile la surface (4) du corps, au moins un mécanisme d'entraînement (10) pour déplacer l'essuie-glace (8) d'une première position (P1) à au moins une deuxième position (P2), au moins une unité de capteur (12) comprenant une caméra (16) et au moins une commande (14), comportant les étapes suivantes :
a. Déplacer l'essuie-glace (8) d'une première position (P1) à une deuxième position (P2) par le mécanisme d'entraînement (10) entraîné par la commande (14) déterminant une vitesse de l'essuie-glace (8) ;
b. Suivre le mouvement de l'essuie-glace (8) en utilisant des techniques de traitement d'image (20) en utilisant l'unité de capteur (12) analysant des images enregistrées de la caméra (16), dans lequel la vitesse de l'essuie-glace (8) est suivie par l'unité de capteur (12) ;
c. Calculer une position de l'essuie-glace (8) à partir du suivi du mouvement de l'essuie-glace (8) indépendamment du fait que l'essuie-glace (8) est toujours détectable par l'unité de capteur (12) ;
d. Utiliser les deux paramètres, la technique de traitement d'image (20) pour suivre le mouvement de l'essuie-glace (8) et une détection de saleté (22) pour démarrer et arrêter le mécanisme d'entraînement (10) ; et
e. Désactiver le mécanisme d'entraînement (10) de l'essuie-glace (8) à une position de désactivation déterminée en tenant compte d'un décalage horaire entre la détection qu'une qualité d'image est à nouveau bonne et une position d'arrêt réelle de l'essuie-glace (8) pour stationner l'essuie-glace (8) dans une position de stationnement définie.

2. Procédé selon la revendication 1, **caractérisé en ce que** l'unité de commande (14) démarre et arrête le mécanisme d'entraînement (10).

3. Procédé selon l'une quelconque des revendications précédentes, **caractérisé en ce que** de la saleté sur la surface (4) du corps (6) en forme de calotte ou de plaque est détectée par l'unité de capteur (12) ou une autre unité de capteur (12) et/ou que l'entraînement du mécanisme d'entraînement (10), en particulier le démarrage et l'arrêt du mécanisme d'entraînement (10), est affecté par la saleté détectée sur la surface (4) du corps (6) en forme de calotte ou de plaque.

4. Procédé selon la revendication 3, **caractérisé en ce que** l'unité de commande (14) démarre le mécanisme d'entraînement (10) lorsqu'un degré de saleté prédéterminé sur la surface (4) détecté par l'unité de capteur (12) est atteint ou dépassé et/ou que l'unité de commande (14) arrête le mécanisme d'entraînement (10) lorsque le degré de saleté prédéterminé sur la surface (4) est inférieur et l'essuie-glace (8) est dans au moins une position de stationnement définie.

5. Procédé selon l'une quelconque des revendications précédentes, **caractérisé en ce que** la vitesse détectée de la plaque, en particulier la performance du mécanisme d'entraînement (10), est ajustée ou calibrée par l'unité de commande (14) en fonction d'une vitesse spécifiée, en particulier une vitesse angulaire.

6. Dispositif d'essuyage (2) pour nettoyer une surface (4) d'un corps (6) en forme de calotte ou de plaque, ayant au moins un essuie-glace (8) touchant de manière mobile la surface (4) du corps, au moins un mécanisme d'entraînement (10) pour déplacer l'essuie-glace (8) d'une première position (P1) à au moins une deuxième position (P2), au moins une unité de capteur (12) comprenant une caméra (16) et au moins une commande (14), **caractérisé en ce que** le mécanisme d'entraînement (10) est entraîné par la commande (14) selon un procédé selon l'une des revendications 1 à 6.

7. Dispositif d'essuyage (2) selon la revendication 6, **caractérisé en ce que** un commutateur, en particulier un relais et/ou un commutateur électronique (18), est prévu pour démarrer et arrêter le mécanisme d'entraînement (10).
